# EUROPEAN PATENT APPLICATION

(11) **EP 3 961 548 A1**
(43) Date of publication of application: **02.03.2022**
(21) Application number: 19930912.1
(22) Date of filing: 29.05.2019
(51) Int. Cl.: G06Q 50/06, G06Q 10/06

(54) **POWER GRID USER CLASSIFICATION METHOD AND DEVICE, AND COMPUTER-READABLE STORAGE MEDIUM**

(71) Applicant: Siemens Aktiengesellschaft, 80333 München (DE)
(72) Inventor: LI, Ang, Beijing 100102 (CN); LI, Jing, Beijing 100010 (CN); LIU, Hao, Beijing 100102 (CN); WANG, Dan, Beijing 100102 (CN); HUA, Wentao, Beijing 100102 (CN)
(74) Representative: Isarpatent
(86) International application number: PCT/CN2019/089103
(87) International publication number: WO 2020/237540

(57) **Abstract**

Disclosed are a power grid user classification method and device, and a computer-readable storage medium. The method comprises: determining user power consumption data of each time period within a time interval, wherein the user power consumption data of each time period comprises user power consumption data of each time granularity within the time period; generating a power consumption pattern image of a user within the time interval on the basis of the user power consumption data of each time period within the time interval; and classifying the user on the basis of an image recognition result of the power consumption pattern image. A user is classified by performing image recognition on a power consumption pattern image, and file information does not need to be manually inputted, thereby reducing a manual workload. In addition, a completion defect caused by incomplete file information is avoided, thereby improving the accuracy of classification.

## Description

### Technical Field

The present invention relates to the technical field of electric power, in particular to a power grid user classification method and device and a computer-readable storage medium.

### Background Art

Currently, there is a high demand for user management of a power grid. For example, the problem of power thefts is becoming more and more prominent. The problem not only hinders the development of power supply enterprises, but also severely influences the economic construction of a country and the stability of society. In order to identify a power theft behavior, it is usually necessary to classify users by trade.

In the current user management of a power grid, users are classified by trade mainly based on the archival information manually filled in at the registration of users. However, archival information manually filled is not always accurate because of the involvement of human factors. As a result, the results of user classifications may be inaccurate. In addition, manually filling archival information will increase the workload.

### Summary of the Invention

The power grid user classification and device and the computer-readable storage medium provided in the embodiments of the present invention reduce the manual workload.

The technical solutions adopted for the embodiments of the present invention are as follows:
A power grid user classification method comprises:
   determining power consumption data of a user in each time segment within a time interval, wherein power consumption data of a user in each time segment comprises power consumption data of the user in each time granularity within the time segment;
   generating a power consumption mode image of a user within the time interval based on the power consumption data of the user in each time segment within the time interval;
   classifying the user based on the image identification result of the power consumption mode image.

By identifying a power consumption mode image to classify a user and without any necessity of manually filling archival information, the embodiments of the present invention can reduce the manual workload. In addition, the embodiments of the present invention avoid the completeness defect of archival information and improve the classification accuracy.

In one embodiment, generating a power consumption mode image of a user within the time interval based on the power consumption data of the user in each time segment within the time interval comprises presenting power consumption data of a user in all time granularities within each time segment according to the chromatic feature corresponding to the value of the power consumption data of the user in a coordinate system where the horizontal axis represents the time segment and the vertical axis represents the time granularity so as to generate a power consumption mode image of the user, and classifying the user based on the image identification result of the power consumption mode image comprises extracting a chromatic feature of the power consumption mode image and classifying the user based on the chromatic feature.

Therefore, a power consumption mode image contains a chromatic feature corresponding to the value of the power consumption of a user, and a user can conveniently be classified based on the extracted chromatic feature. In addition, power consumption data is presented by use of time dimensions such as time granularity, time segment and time interval in a power consumption mode image containing a chromatic feature, the number of reflected behavior features of a user is large, and a better classification result can be obtained.

In one embodiment, generating a power consumption mode image of a user within the time interval based on the power consumption data of the user in each time segment within the time interval comprises presenting power consumption data of a user in all time granularities within each time segment according to the form feature corresponding to the value of the power consumption data of the user in a coordinate system where the horizontal axis represents the time segment and the vertical axis represents the time granularity so as to generate a power consumption mode image of the user, and classifying the user based on the image identification result of the power consumption mode image comprises extracting a form feature of the power consumption mode image and classifying the user based on the form feature.

Therefore, a power consumption mode image contains a form feature corresponding to the value of the power consumption of a user, and a user can conveniently be classified based on the extracted form feature. In addition, power consumption data is presented by use of time dimensions such as time granularity, time segment and time interval in a power consumption mode image containing a form feature, the number of reflected behavior features of a user is large, and a better classification result can be obtained.

In one embodiment, generating a power consumption mode image of a user within the time interval based on the power consumption data of the user in each time segment within the time interval comprises presenting power consumption data of a user in all time granularities within each time segment according to the textural feature corresponding to the value of the power consumption data of the user in a coordinate system where the horizontal axis represents the time segment and the vertical axis represents the time granularity so as to generate a power consumption mode image of the user, and classifying the user based on the image identification result of the power consumption mode image comprises extracting a textural feature of the power consumption mode image and classifying the user based on the textural feature.

Therefore, a power consumption mode image contains a textural feature corresponding to the value of the power consumption of a user, and a user can conveniently be classified based on the extracted textural feature. In addition, power consumption data is presented by use of time dimensions such as time granularity, time segment and time interval in a power consumption mode image containing a textural feature, the number of reflected behavior features of a user is large, and a better classification result can be obtained.

In one embodiment, generating a power consumption mode image of a user within the time interval based on the power consumption data of the user in each time segment within the time interval comprises presenting power consumption data of a user in all time granularities within each time segment according to the spatial relationship feature corresponding to the value of the power consumption data of the user in a coordinate system where the horizontal axis represents the time segment and the vertical axis represents the time granularity so as to generate a power consumption mode image of the user, and classifying the user based on the image identification result of the power consumption mode image comprises extracting a spatial relationship feature of the power consumption mode image and classifying the user based on the spatial relationship feature.

Therefore, a power consumption mode image contains a spatial relationship feature corresponding to the value of the power consumption of a user, and a user can conveniently be classified based on the extracted spatial relationship feature. In addition, power consumption data is presented by use of time dimensions such as time granularity, time segment and time interval in a power consumption mode image containing a spatial relationship feature, the number of reflected behavior features of a user is large, and a better classification result can be obtained.

In one embodiment, the time granularity is an hour, the time segment is a day, and the time interval is a week, or
the time granularity is an hour, the time segment is a day, and the time interval is a month, or
the time granularity is an hour, the time segment is a day, and the time interval is a quarter, or
the time granularity is an hour, the time segment is a day, and the time interval is a year, or
the time granularity is a minute, the time segment is an hour, and the time interval is a day, or
the time granularity is a minute, the time segment is an hour, and the time interval is a week, or
the time granularity is a minute, the time segment is an hour, and the time interval is a month, or
the time granularity is a minute, the time segment is an hour, and the time interval is a quarter, or
the time granularity is a minute, the time segment is an hour, and the time interval is a year.

It can be seen that the time granularity, time segment and time interval can be divided in a plurality of ways which power grid enterprises can conveniently select.

A power grid user classification device comprises:
a power consumption data determination module, configured to determine power consumption data of a user in each time segment within a time interval, wherein power consumption data of a user in each time segment comprises power consumption data of the user in each time granularity within the time segment,
an image generation module, configured to generate a power consumption mode image of a user within the time interval based on the power consumption data of the user in each time segment within the time interval, and
a classification module, configured to classify the user based on the image identification result of the power consumption mode image.

By identifying a power consumption mode image to classify a user and without any necessity of manually filling archival information, the embodiments of the present invention can reduce the manual workload. In addition, the embodiments of the present invention avoid the completeness defect of archival information and improve the classification accuracy.

In one embodiment, the image generation module is configured to present power consumption data of a user in all time granularities within each time segment according to the chromatic feature corresponding to the value of the power consumption data of the user in a coordinate system where the horizontal axis represents the time segment and the vertical axis represents the time granularity so as to generate a power consumption mode image of the user, and the classification module is configured to extract a chromatic feature of the power consumption mode image and classify the user based on the chromatic feature.

Therefore, a power consumption mode image contains a chromatic feature corresponding to the value of the power consumption of a user, and a user can conveniently be classified based on the extracted chromatic feature. In addition, power consumption data is presented by use of time dimensions such as time granularity, time segment and time interval in a power consumption mode image containing a chromatic feature, the number of reflected behavior features of a user is large, and a better classification result can be obtained.

In one embodiment, the image generation module is configured to present power consumption data of a user in all time granularities within each time segment according to the form feature corresponding to the value of the power consumption data of the user in a coordinate system where the horizontal axis represents the time segment and the vertical axis represents the time granularity so as to generate a power consumption mode image of the user, and the classification module is configured to extract a form feature of the power consumption mode image and classify the user based on the form feature.

Therefore, a power consumption mode image contains a form feature corresponding to the value of the power consumption of a user, and a user can conveniently be classified based on the extracted form feature. In addition, power consumption data is presented by use of time dimensions such as time granularity, time segment and time interval in a power consumption mode image containing a form feature, the number of reflected behavior features of a user is large, and a better classification result can be obtained.

In one embodiment, the image generation module is configured to present power consumption data of a user in all time granularities within each time segment according to the textural feature corresponding to the value of the power consumption data of the user in a coordinate system where the horizontal axis represents the time segment and the vertical axis represents the time granularity so as to generate a power consumption mode image of the user, and the classification module is configured to extract a textural feature of the power consumption mode image and classify the user based on the textural feature.

Therefore, a power consumption mode image contains a textural feature corresponding to the value of the power consumption of a user, and a user can conveniently be classified based on the extracted textural feature. In addition, power consumption data is presented by use of time dimensions such as time granularity, time segment and time interval in a power consumption mode image containing a textural feature, the number of reflected behavior features of a user is large, and a better classification result can be obtained.

In one embodiment, the image generation module is configured to present power consumption data of a user in all time granularities within each time segment according to the spatial relationship feature corresponding to the value of the power consumption data of the user in a coordinate system where the horizontal axis represents the time segment and the vertical axis represents the time granularity so as to generate a power consumption mode image of the user, and the classification module is configured to extract a spatial relationship feature of the power consumption mode image and classify the user based on the spatial relationship feature.

Therefore, a power consumption mode image contains a spatial relationship feature corresponding to the value of the power consumption of a user, and a user can conveniently be classified based on the extracted spatial relationship feature. In addition, power consumption data is presented by use of time dimensions such as time granularity, time segment and time interval in a power consumption mode image containing a spatial relationship feature, the number of reflected behavior features of a user is large, and a better classification result can be obtained.

A power grid classification device comprises a processor and a memory,
applications which can be executed by the processor and are configured to enable the processor to execute the power grid user classification method are stored in the memory.

Computer-readable instructions are stored in a computer-readable storage medium and the computer-readable instructions are configured to execute the power grid user classification method.

A computer program product is provided, the computer program product is tangibly stored in a computer-readable medium and comprises computer executable instructions, and at least one processor executes the power grid user classification method as claimed in any of claims 1 to 6 when the computer executable instructions are executed.

### Brief Description of the Drawings

Fig. 1 is a flowchart of the power grid user classification method in the embodiments of the present invention.
Fig. 2 shows examples of time interval, time segment and time granularity in the embodiments of the present invention.
Fig. 3 shows a first example of a power consumption mode image in the embodiments of the present invention.
Fig. 4 shows a second example of a power consumption mode image in the embodiments of the present invention.
Fig. 5 compares the power grid user classification processing procedure in the embodiments of the present invention with the power grid user classification processing procedure in the prior art.
Fig. 6 shows the structure of the power grid user classification device in the embodiments of the present invention.
Fig. 7 shows the structure of the power grid user classification device comprising a processor and a memory in the embodiments of the present invention.

**Description of reference numerals in the drawings:**

| Reference numeral | Meaning |
|---|---|
| 101-103 | Step |
| 501 | User |
| 502 | Archival information |
| 503 | Reliability defect |
| 504 | Completeness defect |
| 505 | Power consumption data |
| 506 | Power consumption curve |
| 507 | Feature deletion defect |
| 508 | Power consumption mode image |
| 509 | Classification result |
| 600 | Power grid user classification device |
| 601 | Power consumption data determination module |
| 602 | Image generation module |
| 603 | Classification module |
| 700 | Power consumption data determination module |
| 701 | Processor |
| 702 | Memory |

### Detailed Description of the Invention

To make clearer the technical solutions and advantages of the present invention, the present invention is further described in detail below in combination with the drawings and embodiments. It should be understood that the specific embodiments described here are used only to describe the present invention in a descriptive way, but not used to restrict the scope of protection of the present invention.

For the purposes of simplicity and intuitiveness of the description, the following gives some representative embodiments to describe the solutions of the present invention. A large amount of details in the embodiments are only used to help to understand the solutions of the present invention. Obviously, the technical solutions of the present invention are not limited to these details, however. To avoid unnecessarily making the solutions of the present invention confusing, some embodiments are not described in detail, and only their frameworks are given. Hereinbelow, the term "comprise" refers to "include but are not limited to" and the term "according to..." refers to "at least according to..., but not limited to only according to...". In view of the linguistic habits of Chinese, the number of a component hereinafter can be one or more or can be understood as at least one, unless otherwise specified.

In view of the many defects of user classification based on archival information manually filled at the registration of users in the prior art, the technical solution proposed in the embodiments of the present invention that a power consumption mode image is identified to classify a user can reduce manual workload and improve the classification accuracy.

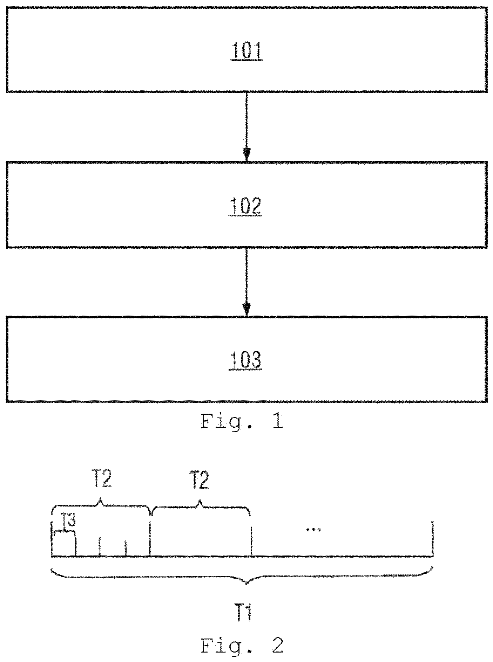

Fig. 1 is a flowchart of the power grid user classification method in the embodiments of the present invention.

As shown in Fig. 1, the method comprises:
Step 101: Determine power consumption data of a user in each time segment within a time interval, wherein power consumption data of a user in each time segment comprises power consumption data of the user in each time granularity within the time segment.

Here, time interval, time segment and time granularity are all units of time. Wherein, the length of a time interval is greater than the length of a time segment, and the length of a time segment is greater than the length of a time granularity. A time interval comprises a plurality of time segments and each time segment comprises a plurality of time granularities.

Fig. 2 shows examples of time interval, time segment and time granularity in the embodiments of the present invention.

It can be seen from Fig. 2 that a time interval T1 comprises a plurality of time segments T2 and each time segment T2 comprises a plurality of time granularities T3.

Wherein, a time interval, time segment and time granularity may be not only natural time such as natural year, natural month or natural day, but also units of time set arbitrarily.

For example, a time interval may be a week, a time segment may be a day, and a time granularity may be an hour. In this way, a time interval (a week) comprises 7 time segments and each time segment (a day) comprises 24 time granularities (hours). In this case, in Step 101, power consumption data (for example, power consumption) of a user in 24 hours in each day in a week is determined based on the reading on a smart electric meter installed for the power grid user or the power consumption database saved on a cloud.

For example, a time interval may be a month, a time segment may be a day, and a time granularity may be an hour. In this way, a time interval (a month) comprises 30 time segments and each time segment (a day) comprises 24 time granularities (hours). In this case, in Step 101, power consumption data (for example, power consumption) of a user in 24 hours in each day in a month is determined based on the reading on a smart electric meter installed for the power grid user or the power consumption database saved on a cloud.

For example, a time interval may be a quarter, a time segment may be a day, and a time granularity may be an hour. A time interval (a quarter) may comprise 90 time segments, and each time segment (a day) may comprise 24 time granularities (hours). In this case, in Step 101, power consumption data (for example, power consumption) of a user in 24 hours in each day in a quarter is determined based on the reading on a smart electric meter installed for the power grid user or the power consumption database saved on a cloud.

For example, a time interval may be a year, a time segment may be a day, and a time granularity may be an hour. A time interval (a quarter) may, for example, comprise 365 time segments, and each time segment (a day) may comprise 24 time granularities (hours). In this case, in Step 101, power consumption data (for example, power consumption) of a user in 24 hours in each day in a year is determined based on the reading on a smart electric meter installed for the power grid user or the power consumption database saved on a cloud.

For example, a time interval may be a day, a time segment may be an hour, and a time granularity may be a minute. In this way, a time interval (a day) comprises 24 time segments and each time segment (an hour) comprises 60 time granularities (minutes). In this case, in Step 101, power consumption data (for example, power consumption) of a user in each minute in a day is determined based on the reading on a smart electric meter installed for the power grid user or the power consumption database saved on a cloud.

For example, a time interval may be a week, a time segment may be an hour, and a time granularity may be a minute. In this way, a time interval (a week) comprises 168 time segments and each time segment (an hour) comprises 60 time granularities (minutes). In this case, in Step 101, power consumption data (for example, power consumption) of a user in each minute in a week is determined based on the reading on a smart electric meter installed for the power grid user or the power consumption database saved on a cloud.

For example, a time interval may be a month, a time segment may be an hour, and a time granularity may be a minute. In this way, a time interval (a month) comprises 720 time segments and each time segment (an hour) comprises 60 time granularities (minutes). In this case, in Step 101, power consumption data (for example, power consumption) of a user in each minute in a month is determined based on the reading on a smart electric meter installed for the power grid user or the power consumption database saved on a cloud.

For example, a time interval may be a quarter, a time segment may be an hour, and a time granularity may be a minute. In this way, a time interval (a quarter) comprises 2160 time segments and each time segment (an hour) comprises 60 time granularities (minutes). In this case, in Step 101, power consumption data (for example, power consumption) of a user in each minute in a quarter is determined based on the reading on a smart electric meter installed for the power grid user.

For example, a time interval may be a year, a time segment may be an hour, and a time granularity may be a minute. In this way, a time interval (a year) comprises 8760 time segments and each time segment (an hour) comprises 60 time granularities (minutes). In this case, in Step 101, power consumption data (for example, power consumption) of a user in each minute in a year is determined based on the reading on a smart electric meter installed for the power grid user.

Typical examples of a time interval, a time segment and a time granularity and the acquisition of power consumption data of a user are exemplarily described above. Those skilled in the art can know that the description is only used for the exemplary purpose, but is not used to limit the scope of protection of the embodiments of the present invention.

Step 102: Generate a power consumption mode image of a user within the time interval based on the power consumption data of the user in each time segment within the time interval.

Here, a power consumption mode image of a user within the time interval is generated based on the power consumption data of the user in each time segment within the time interval, acquired in Step 101. The generated power consumption mode image comprises image features corresponding to the value of the power consumption data of the user.

Preferably, an image feature such as chromatic feature, textural feature, form feature or spatial relationship feature may be used to represent the value of the power consumption data of the user.

In one embodiment, Step 102 comprises presenting power consumption data of a user in all time granularities within each time segment according to the chromatic feature corresponding to the value of the power consumption data of the user in a coordinate system where the horizontal axis represents the time segment and the vertical axis represents the time granularity so as to generate a power consumption mode image of the user. For example, the correspondence relationship between a chromatic feature and a value of power consumption data includes: red indicates a value of power consumption of a user in a high-value interval, orange indicates a value of power consumption of a user in a medium-value interval, and green indicates a value of power consumption of a user in a low-value interval.

In one embodiment, Step 102 comprises presenting power consumption data of a user in all time granularities within each time segment according to the form feature corresponding to the value of the power consumption data of the user in a coordinate system where the horizontal axis represents the time segment and the vertical axis represents the time granularity so as to generate a power consumption mode image of the user. For example, the correspondence relationship between a form feature and a value of power consumption data includes: a triangle indicates a value of power consumption of a user in a high-value interval, a square indicates a value of power consumption of a user in a medium-value interval, and a circle indicates a value of power consumption of a user in a low-value interval.

In one embodiment, Step 102 comprises presenting power consumption data of a user in all time granularities within each time segment according to the textural feature corresponding to the value of the power consumption data of the user in a coordinate system where the horizontal axis represents the time segment and the vertical axis represents the time granularity so as to generate a power consumption mode image of the user. For example, the correspondence relationship between a textural feature and a value of power consumption data includes: a craquelure texture indicates a value of power consumption of a user in a high-value interval, a mosaic texture indicates a value of power consumption of a user in a medium-value interval, and a granular texture indicates a value of power consumption of user in a low-value interval.

In one embodiment, Step 102 comprises presenting power consumption data of a user in all time granularities within each time segment according to the spatial relationship feature corresponding to the value of the power consumption data of the user in a coordinate system where the horizontal axis represents the time segment and the vertical axis represents the time granularity so as to generate a power consumption mode image of the user. For example, the correspondence relationship between a spatial relationship feature and a value of power consumption data includes: a connection/adjacency relationship indicates a value of power consumption of a user in a high-value interval, an overlapping/superimposing relationship indicates a value of power consumption of a user in a medium-value interval, and an inclusion/containment relationship indicates a value of power consumption of a user in a low-value interval.

Typical examples of image features and typical examples of correspondence relationships between image features and values of power consumption are exemplarily described above. Those skilled in the art may realize that the description is only used for the exemplary purpose, but is not used to limit the scope of protection of the embodiments of the present invention.

The following gives an example of the generation of a power consumption mode image containing chromatic features indicating the values of power consumption data of a user.

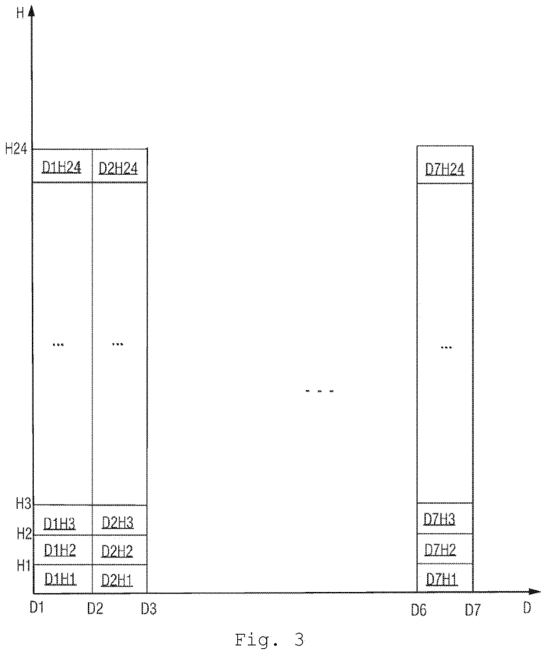

Fig. 3 shows a first example of a power consumption mode image in the embodiments of the present invention.

As shown in Fig. 3, in the coordinate system where the horizontal axis (D-axis) represents the day and the vertical axis (H-axis) represents the hour, the time interval is a week (containing 7 days), the time segment is implemented as a day, and the time granularity is implemented as an hour.

First, acquire the power consumption of the user in 24 hours in each day within a week based on the reading on the smart electric meter installed for the power grid user or the power consumption database saved on a cloud.

Then, determine the display color corresponding to the pixel region of each hour in each day within a week based on the values of the power consumption in 24 hours in each day within a week.

To be specific,
Determine the display color of the pixel region D1H1 in the coordinate system based on the value of the power consumption in the first hour (H1) in the first day (D1). Wherein, if the power consumption in the first hour (H1) in the first day (D1) is in a high-value interval, the display color of the pixel region D1H1 is red; if the power consumption in the first hour (H1) in the first day (D1) is in a medium-value interval, the display color of the pixel region D1H1 is orange, and if the power consumption in the first hour (H1) in the first day (D1) is in a low-value interval, the display color of the pixel region D1H1 is green.
Determine the display color of the pixel region D1H2 in the coordinate system based on the value of the power consumption in the second hour (H2) in the first day (D1). Alike, if the power consumption in the second hour (H2) in the first day (D1) is in a high-value interval, the display color of the pixel region D1H2 is red; if the power consumption in the second hour (H2) in the first day (D1) is in a medium-value interval, the display color of the pixel region D1H2 is orange, and if the power consumption in the second hour (H2) in the first day (D1) is in a low-value interval, the display color of the pixel region D1H2 is green.
Determine the display color of the pixel region D1H3 in the coordinate system based on the value of the power consumption in the third hour (H3) in the first day (D1). Alike, if the power consumption in the third hour (H3) in the first day (D1) is in a high-value interval, the display color of the pixel region D1H3 is red; if the power consumption in the third hour (H2) in the first day (D1) is in a medium-value interval, the display color of the pixel region D1H3 is orange, and if the power consumption in the third hour (H3) in the first day (D1) is in a low-value interval, the display color of the pixel region D1H3 is green.

Continue to determine the display colors of the corresponding pixel regions in the coordinate system based on the values of the power consumption in the fourth hour (H4) in the first day (D1), in the fifth hour (H5) in the first day (D1), and so on..., and finally determine the display color of the pixel region D1H24 in the coordinate system based on the value of the power consumption in the 24th hour (H24) in the first day (D1). Alike, if the power consumption in the 24th hour (H24) in the first day (D1) is in a high-value interval, the display color of the pixel region D1H24 is red; if the power consumption in the 24th hour (H2) in the first day (D1) is in a medium-value interval, the display color of the pixel region D1H24 is orange, and if the power consumption in the 24th hour (H24) in the first day (D1) is in a low-value interval, the display color of the pixel region D1H24 is green.

So far, the colors of the pixel regions of all 24 hours in the first day have been determined.

Then, and so on..., determine the display colors of the pixel regions of all 24 hours in the second day, third day, ... and seventh day to complete the color determination of all pixel regions within a week.

The image finally formed in the above-mentioned way is the power consumption mode image within a week, and the chromatic features contained in the power consumption mode image indicate the value of the power consumption of a user in each time granularity in each time segment within a time interval. The following gives an example of the generation of a power consumption mode image containing form features indicating the values of power consumption data of a user.

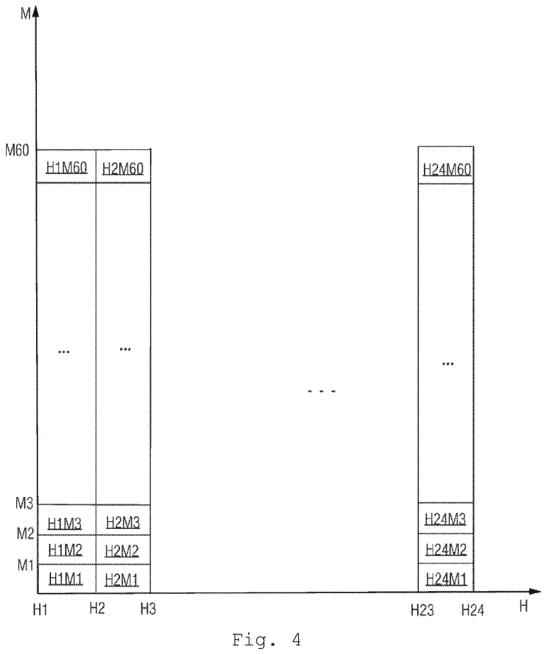

Fig. 4 shows a second example of a power consumption mode image in the embodiments of the present invention.

As shown in Fig. 4, in the coordinate system where the horizontal axis (H-axis) represents the hour and the vertical axis (M-axis) represents the minute, the time interval is a day (containing 24 hours), the time segment is implemented as an hour (containing 60 minutes) and the time granularity is implemented as a minute.

First, acquire the power consumption of the user in each minute in each hour within a day based on the reading on the smart electric meter installed for the power grid user or the power consumption database saved on a cloud.

Then, determine the display form of the pixel region corresponding to each minute in each hour within a day based on the value of the power consumption in each minute in each hour within a day.

To be specific,
Determine the display form of the pixel region H1M1 in the coordinate system based on the value of the power consumption in the first minute (M1) in the first hour (H1). Wherein, if the power consumption in the first minute (M1) in the first hour (H1) is in a high-value interval, the display form of the pixel region H1M1 is a triangle; if the power consumption in the first minute (M1) in the first hour (H1) is in a medium-value interval, the display form of the pixel region H1M1 is a square, and if the power consumption in the first minute (M1) in the first hour (H1) is in a low-value interval, the display form of the pixel region H1M1 is a circle.
Determine the display form of the pixel region H1M2 in the coordinate system based on the value of the power consumption in the second minute (M2) in the first hour (H1). Alike, if the power consumption in the second minute (M2) in the first hour (H1) is in a high-value interval, the display form of the pixel region H1M2 is a triangle; if the power consumption in the second minute (M2) in the first hour (H1) is in a medium-value interval, the display form of the pixel region H1M2 is a square, and if the power consumption in the second minute (M2) in the first hour (H1) is in a low-value interval, the display form of the pixel region H1M2 is a circle.
Determine the display form of the pixel region H1M3 in the coordinate system based on the value of the power consumption in the third minute (M3) in the first hour (H1). Wherein, if the power consumption in the third minute (M3) in the first hour (H1) is in a high-value interval, the display form of the pixel region H1M3 is a triangle; if the power consumption in the third minute (M3) in the first hour (H1) is in a medium-value interval, the display form of the pixel region H1M3 is a square, and if the power consumption in the third minute (M3) in the first hour (H1) is in a low-value interval, the display form of the pixel region H1M3 is a circle.

Continue to determine the display forms of the corresponding pixel regions in the coordinate system based on the values of the power consumption in the fourth minute (M4) in the first hour (H1), in the fifth minute (M5) in the first hour (H1), and so on..., and finally determine the display form of the pixel region H1M60 in the coordinate system based on the value of the power consumption in the 60th minute (M60) in the first hour (H1). Alike, if the power consumption in the 60th minute (M60) in the first hour (H1) is in a high-value interval, the display form of the pixel region H1M60 is a triangle; if the power consumption in the 60th minute (M60) in the first hour (H1) is in a medium-value interval, the display form of the pixel region H1M60 is a square, and if the power consumption in the 60th minute (M1) in the first hour (H1) is in a low-value interval, the display form of the pixel region H1M60 is a circle.

So far, the forms of the pixel regions of all 60 minutes in the first hour have been determined. Then, and so on..., determine the display forms of the pixel regions of all 60 minutes in the second hour, third hour, ... and 24th hour to complete the form determination of all pixel regions within a day.

The image finally formed in the above-mentioned way is the power consumption mode image within a day, and the form features contained in the power consumption mode image indicate the value of the power consumption of a user in each time granularity in each time segment within a time interval.

Typical examples of the generation of power consumption mode images containing image features indicating the values of power consumption data of a user, such as chromatic features and form features, are described above. Those skilled in the art may realize that power consumption mode images containing image features such as textural features or spatial relationship features may be generated in a similar way. The image features are not restricted in the embodiments of the present invention.

Step 103: Classify the user based on the image identification result of the power consumption mode image.

Here, the image recognition technology is utilized to extract image features from the power consumption mode image and then the user is classified based on the extracted image features.

When the power consumption mode image contains chromatic features, Step 103 comprises: extracting chromatic features of the power consumption mode image and classifying the user based on the chromatic features. When the power consumption mode image contains form features, Step 103 comprises: extracting form features of the power consumption mode image and classifying the user based on the form features. When the power consumption mode image contains textural features, Step 103 comprises: extracting textural features of the power consumption mode image and classifying the user based on the textural features. When the power consumption mode image contains spatial relationship features, Step 103 comprises: extracting spatial relationship features of the power consumption mode image and classifying the user based on the spatial relationship features.

For example, the machine learning method, fractal feature method or wavelet moment method may be adopted to extract image features and classify a user. In the machine learning method, supervised learning, unsupervised learning, semi-supervised learning or a clustering algorithm may be adopted to realize user classification.

In one embodiment, a feature template corresponding to the attributes of a trade is preset, and the extracted image features are compared with the feature template to determine the class of the trade a user belongs to.

In one embodiment, a convolutional neural network is trained based on training samples, and the extracted image features are input into the convolutional neural network to determine the class of the trade a user belongs to.

In one embodiment, the extracted image features are clustered based on a clustering algorithm such as K-means clustering algorithm to determine the class of the trade a user belongs to.

Specific ways of realizing user classification are exemplarily described above. Those skilled in the art may realize that the description is only used for the exemplary purpose, but is not used to limit the scope of protection of the embodiments of the present invention.

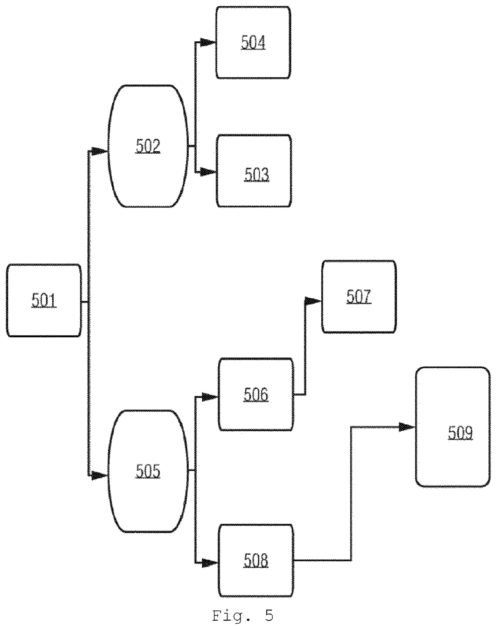

Fig. 5 compares the power grid user classification processing procedure in the embodiments of the present invention with the power grid user classification processing procedure in the prior art.

In Fig. 5, a user 501 is usually classified based on archival information 502 in the prior art. Since archival information manually filled is not always correct or complete, this classification method has a reliability defect 503 and a completeness defect 504.

Power consumption data 505 may be collected for a user 501. In the prior art, a user may also be classified based on a power consumption curve 506 generated from power consumption data 505. However, a power consumption curve 506 can display power consumption data only in one time dimension, and the power consumption curve can reflect a single user behavior feature. Therefore, this classification method has a feature deletion defect 507.

In the embodiments of the present invention, power consumption data 505 is collected for a user 501, and a power consumption mode image 508 is generated for classification based on user data 505 and the divisions of the time interval, time segment and time granularity. In a power consumption mode image 508, power consumption data is presented by use of time dimensions such as time granularity, time segment and time interval, the number of reflected behavior features of a user is large, and a better classification result 509 can be obtained.

Based on the description above, the embodiments of the present invention further provide a power grid user classification device.

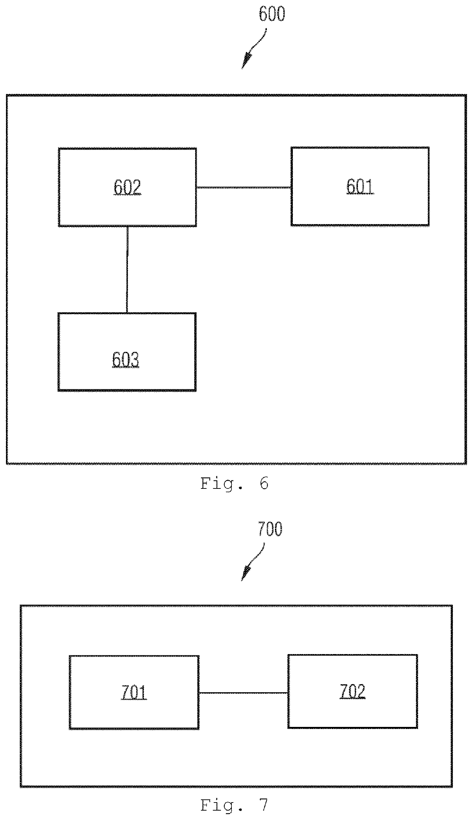

Fig. 6 shows the structure of the power grid user classification device in the embodiments of the present invention.

As shown in Fig. 6, the power grid user classification device 600 comprises:
a power consumption data determination module 601, configured to determine power consumption data of a user in each time segment within a time interval, wherein power consumption data of a user in each time segment comprises power consumption data of the user in each time granularity within the time segment,
an image generation module 602, configured to generate a power consumption mode image of a user within the time interval based on the power consumption data of the user in each time segment within the time interval, and
a classification module 603, configured to classify the user based on the image identification result of the power consumption mode image.

In one embodiment, the image generation module 601 is configured to present power consumption data of a user in all time granularities within each time segment according to the chromatic feature corresponding to the value of the power consumption data of the user in a coordinate system where the horizontal axis represents the time segment and the vertical axis represents the time granularity so as to generate a power consumption mode image of the user, and the classification module 602 is configured to extract a chromatic feature of the power consumption mode image and classify the user based on the chromatic feature.

In one embodiment, the image generation module 601 is configured to present power consumption data of a user in all time granularities within each time segment according to the form feature corresponding to the value of the power consumption data of the user in a coordinate system where the horizontal axis represents the time segment and the vertical axis represents the time granularity so as to generate a power consumption mode image of the user, and the classification module 602 is configured to extract a form feature of the power consumption mode image and classify the user based on the form feature.

In one embodiment, the image generation module 601 is configured to present power consumption data of a user in all time granularities within each time segment according to the textural feature corresponding to the value of the power consumption data of the user in a coordinate system where the horizontal axis represents the time segment and the vertical axis represents the time granularity so as to generate a power consumption mode image of the user, and the classification module 602 is configured to extract a textural feature of the power consumption mode image and classify the user based on the textural feature.

In one embodiment, the image generation module 602 is configured to present power consumption data of a user in all time granularities within each time segment according to the spatial relationship feature corresponding to the value of the power consumption data of the user in a coordinate system where the horizontal axis represents the time segment and the vertical axis represents the time granularity so as to generate a power consumption mode image of the user, and the classification module 603 is configured to extract a spatial relationship feature of the power consumption mode image and classify the user based on the spatial relationship feature. The embodiments of the present invention further provide a power grid user classification device comprising a processor and a memory.

Fig. 7 shows the structure of the power grid user classification device comprising a processor and a memory in the embodiments of the present invention.

As shown in Fig. 7, the power grid user classification device 700 comprises a processor 701 and a memory 702, and applications which can be executed by the processor 701 and are configured to enable the processor 701 to execute the power consumption abnormality identification method are stored in the memory 702.

Wherein, the memory 702 may be specifically implemented as an electrically erasable programmable read-only memory (EEPROM), a flash memory, a programmable ready-only memory (PROM) or other storage media. The processor 701 may be implemented as one or more processors or one or more field programmable gate arrays (FPGAs), wherein one or more central processing unit cores are integrated in the FPGA. Specifically, the central processing unit or the central processing unit core may be implemented as a CPU or MCU.

It should be noted that not all steps or modules in the above-mentioned flowcharts and system structure diagrams are required, and some steps or modules can be omitted, depending on the actual requirements. The execution sequence of the steps is not fixed and may be adjusted as required. The system structures described in the above-mentioned embodiments can be physical structures or logical structures. That is to say, some modules may be realized by a physical entity, or some modules may be realized by a plurality of physical entities or may jointly be realized by some components in a plurality of self-contained devices.

The hardware modules in different embodiments can mechanically or electronically be realized. For example, a hardware module may comprise specially designed permanent circuits or logic devices (for example, application-specific processors such as FPGA or ASIC) to complete specific operations. A hardware module may also comprise programmable logic devices or circuits (for example, general processors or other programmable processors) temporarily configured by software to perform specific operations. Whether a hardware module is realized mechanically, or by use of a dedicated permanent circuit or a temporarily configured circuit (for example, configured by software) may depend on the considerations of the cost and the time.

The present invention further provides a machine-readable storage medium, in which instructions allowing a machine to execute the method described in this document are stored. Specifically, a system or device equipped with a storage medium may be provided. Software program codes which may realize the function in any of above-mentioned embodiments are stored in the storage medium and the computer (or CPU or MPU) of the system or device may read and execute the program codes stored in the storage medium. In addition, through the commands based on the program codes, the operating system on the computer may complete a part of or all of practical operations. In addition, the program codes read out of the storage medium may be written into the memory in an expansion board in the computer or may be written into the memory in an expansion unit connected to the computer, and then the commands based on the program codes let the CPU installed on the expansion board or expansion unit execute a part or all of practical operations to realize the function in any of the above-mentioned embodiments.

The storage medium used to provide program codes includes a floppy disk, hard disk, magneto-optical disk, optical disk (for example, CD-ROM, CD-R, CD-RW, DVD-ROM, DVD-RAM, DVD-RW, DVD+RW), magnetic tape, non-volatile memory card, and ROM. Alternatively, program codes can be downloaded from a server computer or cloud over a communication network.

The embodiments of the present invention provide a computer program product, the computer program product is tangibly stored in a computer-readable medium and comprises computer executable instructions, and at least one processor executes the power grid user classification method as claimed in any of claims 1 to 6 when the computer executable instructions are executed.

The embodiments described above are preferred embodiments of the present invention, but are not used to limit the scope of protection of the present invention. Any modification, equivalent replacement, and improvement within the spirit and principle of the present invention should fall within the scope of protection of the present invention.

## Claims

1. A power grid user classification method, **characterized in that** the method comprises:
determining power consumption data of a user in each time segment within a time interval, wherein power consumption data of a user in each time segment comprises power consumption data of the user in each time granularity within the time segment (101);
generating a power consumption mode image of a user within the time interval based on the power consumption data of the user in each time segment within the time interval (102);
classifying the user based on the image identification result of the power consumption mode image (103).

2. The power grid user classification method according to claim 1, **characterized in that**
generating a power consumption mode image of a user within the time interval based on the power consumption data of the user in each time segment within the time interval (102) comprises presenting power consumption data of a user in all time granularities within each time segment according to the chromatic feature corresponding to the value of the power consumption data of the user in a coordinate system where the horizontal axis represents the time segment and the vertical axis represents the time granularity so as to generate a power consumption mode image of the user;
classifying the user based on the image identification result of the power consumption mode image (103) comprises extracting a chromatic feature of the power consumption mode image and classifying the user based on the chromatic feature.

3. The power grid user classification method according to claim 1, **characterized in that**
generating a power consumption mode image of a user within the time interval based on the power consumption data of the user in each time segment within the time interval (102) comprises presenting power consumption data of a user in all time granularities within each time segment according to the form feature corresponding to the value of the power consumption data of the user in a coordinate system where the horizontal axis represents the time segment and the vertical axis represents the time granularity so as to generate a power consumption mode image of the user;
classifying the user based on the image identification result of the power consumption mode image (103) comprises extracting a form feature of the power consumption mode image and classifying the user based on the form feature.

4. The power grid user classification method according to claim 1, **characterized in that**
generating a power consumption mode image of a user within the time interval based on the power consumption data of the user in each time segment within the time interval (102) comprises presenting power consumption data of a user in all time granularities within each time segment according to the textural feature corresponding to the value of the power consumption data of the user in a coordinate system where the horizontal axis represents the time segment and the vertical axis represents the time granularity so as to generate a power consumption mode image of the user;
classifying the user based on the image identification result of the power consumption mode image (103) comprises extracting a textural feature of the power consumption mode image and classifying the user based on the textural feature.

5. The power grid user classification method according to claim 1, **characterized in that**
generating a power consumption mode image of a user within the time interval based on the power consumption data of the user in each time segment within the time interval (102) comprises presenting power consumption data of a user in all time granularities within each time segment according to the spatial relationship feature corresponding to the value of the power consumption data of the user in a coordinate system where the horizontal axis represents the time segment and the vertical axis represents the time granularity so as to generate a power consumption mode image of the user;
classifying the user based on the image identification result of the power consumption mode image (103) comprises extracting a spatial relationship feature of the power consumption mode image and classifying the user based on the spatial relationship feature.

6. The power grid user classification method according to any of claims 1 to 5, **characterized in that**
the time granularity is an hour, the time segment is a day, and the time interval is a week, or
the time granularity is an hour, the time segment is a day, and the time interval is a month, or
the time granularity is an hour, the time segment is a day, and the time interval is a quarter, or
the time granularity is an hour, the time segment is a day, and the time interval is a year, or
the time granularity is a minute, the time segment is an hour, and the time interval is a day, or
the time granularity is a minute, the time segment is an hour, and the time interval is a week, or
the time granularity is a minute, the time segment is an hour, and the time interval is a month, or
the time granularity is a minute, the time segment is an hour, and the time interval is a quarter, or
the time granularity is a minute, the time segment is an hour, and the time interval is a year.

7. A power grid user classification device (600), **characterized in that** the device comprises:
a power consumption data determination module (601), configured to determine power consumption data of a user in each time segment within a time interval, wherein power consumption data of a user in each time segment comprises power consumption data of the user in each time granularity within the time segment,
an image generation module (602), configured to generate a power consumption mode image of a user within the time interval based on the power consumption data of the user in each time segment within the time interval, and
a classification module (603), configured to classify the user based on the image identification result of the power consumption mode image.

8. The power grid user classification device (600) according to claim 7, **characterized in that**
the image generation module (602) is configured to present power consumption data of a user in all time granularities within each time segment according to the chromatic feature corresponding to the value of the power consumption data of the user in a coordinate system where the horizontal axis represents the time segment and the vertical axis represents the time granularity so as to generate a power consumption mode image of the user, and
the classification module (603) is configured to extract a chromatic feature of the power consumption mode image and classify the user based on the chromatic feature.

9. The power grid user classification device (600) according to claim 7, **characterized in that**
the image generation module (602) is configured to present power consumption data of a user in all time granularities within each time segment according to the form feature corresponding to the value of the power consumption data of the user in a coordinate system where the horizontal axis represents the time segment and the vertical axis represents the time granularity so as to generate a power consumption mode image of the user, and
the classification module (603) is configured to extract a form feature of the power consumption mode image and classify the user based on the form feature.

10. The power grid user classification device (600) according to claim 7, **characterized in that**
the image generation module (602) is configured to present power consumption data of a user in all time granularities within each time segment according to the textural feature corresponding to the value of the power consumption data of the user in a coordinate system where the horizontal axis represents the time segment and the vertical axis represents the time granularity so as to generate a power consumption mode image of the user, and
the classification module (603) is configured to extract a textural feature of the power consumption mode image and classify the user based on the textural feature.

11. The power grid user classification device (600) according to claim 7, **characterized in that**
the image generation module (602) is configured to present power consumption data of a user in all time granularities within each time segment according to the spatial relationship feature corresponding to the value of the power consumption data of the user in a coordinate system where the horizontal axis represents the time segment and the vertical axis represents the time granularity so as to generate a power consumption mode image of the user, and
the classification module (603) is configured to extract a spatial relationship feature of the power consumption mode image and classify the user based on the spatial relationship feature.

12. A power grid user classification device (700), **characterized in that** the device comprises a processor (701) and a memory (702), and
applications which can be executed by the processor (701) and are configured to enable the processor (701) to execute the power grid user classification method as claimed in any of claims 1 to 6 are stored in the memory (702).

13. A computer readable storage medium, **characterized in that** computer-readable instructions are stored in the computer-readable storage medium and the computer-readable instructions are configured to execute the power grid user classification method as claimed in any of claims 1 to 6.

14. A computer program product, the computer program product being tangibly stored in a computer-readable medium and comprising computer executable instructions, and at least one processor executing the power grid user classification method as claimed in any of claims 1 to 6 when the computer executable instructions are executed.
